# EUROPEAN PATENT SPECIFICATION

(11) **EP 2 776 302 B1**
(45) Date of publication and mention of the grant of the patent: **06.09.2017**
(21) Application number: 12813462.4
(22) Date of filing: 09.11.2012
(51) Int. Cl.: B62D 1/10

(54) **STEERING DEVICE**
LENKVORRICHTUNG
DISPOSITIF DE DIRECTION

(30) Priority: 10.11.2011 IT BO20110644
(43) Date of publication of application: 17.09.2014
(73) Proprietor: A.M.A. S.p.A., San Martino in Rio (IT); Ama Composites S.r.l., Campogalliano (IT)
(72) Inventor: KUSHNEREVICH, Alexander, Dniepropetrovsk 49008 (UA)
(74) Representative: Boggio, Luigi
(86) International application number: PCT/IB2012/056314
(87) International publication number: WO 2013/068995

(56) References cited:
- EP-A1- 0 825 089
- EP-A1- 1 190 935
- EP-A2- 1 342 639
- FR-A1- 2 477 091
- FR-A1- 2 827 561
- FR-A1- 2 896 472
- GB-A- 2 436 134
- JP-A- 1 148 640
- JP-A- 1 293 271
- JP-A- 58 183 332
- US-A- 3 548 128
- US-A- 4 766 326
- US-A- 5 072 628

## Description

### TECHNICAL FIELD

The present invention relates to a steering device. In particular, the present invention relates to a steering device comprising a steering wheel and instrumentation, which is fitted in the middle of the steering wheel so as to remain fixed in a predetermined position also during the rotation of the steering wheel itself.

Preferably, the instrumentation is of the electronic type and comprises indicators and/or a display connected to at least one external control unit.

### PRIOR ART

Connecting an instrumentation in the middle of the steering wheel so as to maintain it fixed during the rotation of the steering wheel itself is known, but the steering devices of the known type are complex and costly to make. JP 1 148640 discloses the preamble of claim 1.

### OBJECT OF THE INVENTION

It is the object of the present invention to provide a steering device, which allows to eliminate the drawbacks described above and is particularly compact and effective.

According to the present invention, a steering device is provided as disclosed in claim 1 and, preferably, in any other of the claims either directly or indirectly depending on claim 1.

### BRIEF DESCRIPTION OF THE DRAWINGS

The invention will now be described with reference to the accompanying drawings which illustrate a non-limitative embodiment thereof, in which:
- figure 1 is a side view of the steering device according to the present invention;
- figure 2 is a plan view of the steering device in figure 1;
- figure 3 is a section taken along III-III lines in figure 1;
- figure 4 is a section taken along IV-IV lines in figure 2;
- figure 5 is a perspective view, on enlarged scale, of a first detail in figure 4;
- figure 6 is a perspective view, on enlarged scale, of a second detail in figure 4;
- figure 7 is a perspective view, on enlarged scale, of a third detail in figure 4;
- figure 8 is a perspective view, on enlarged scale, of a fourth detail in figure 4; and
- figure 9 is a perspective view of a fifth detail in figure 4.

### PREFERRED EMBODIMENT OF THE INVENTION

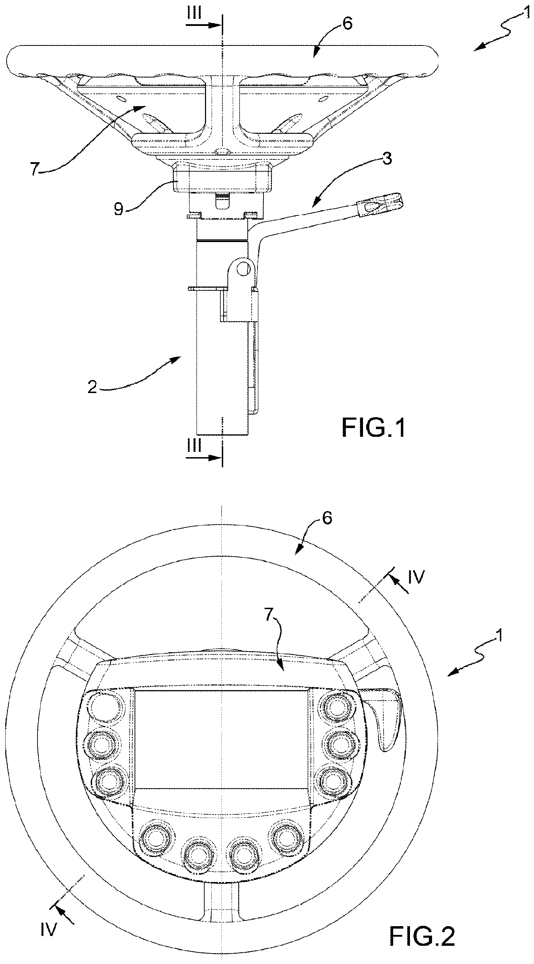

In figures 1 and 2, reference numeral 1 indicates as a whole a steering device adapted to be rapidly coupled to a steering column 2 by means of a toggle system 3 (of known type and only diagrammatically shown).

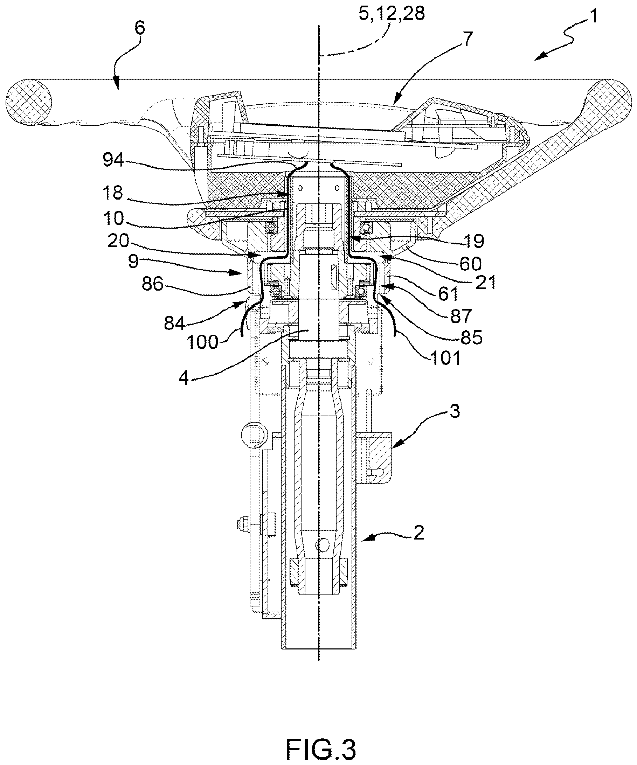

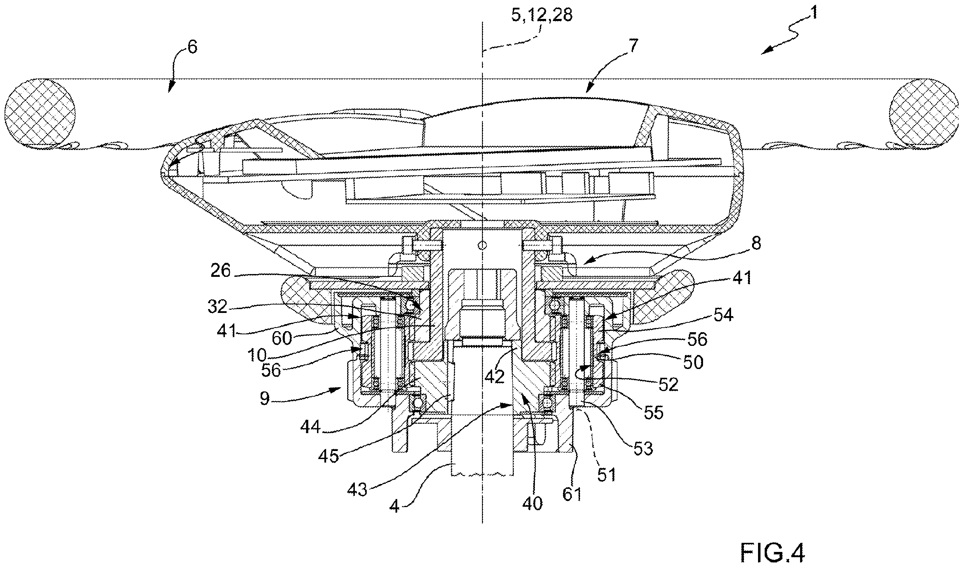

As shown in figures 3 and 4, the device 1 comprises a drive shaft 4 of a rotating torque about an axis 5, a steering wheel 6, and instrumentation 7, which is fitted in a central position of the steering wheel 6, and a gear system 8 (shown in detail in figure 4), which connects the steering wheel 6 to the shaft 4 so as to transmit to the shaft 4 itself a torque imparted by the operator on the steering wheel 6. The device 1 further comprises a box-shaped body 9, which is adapted to house the gear system 8 and is arranged between the shaft 4 and the steering wheel 6.

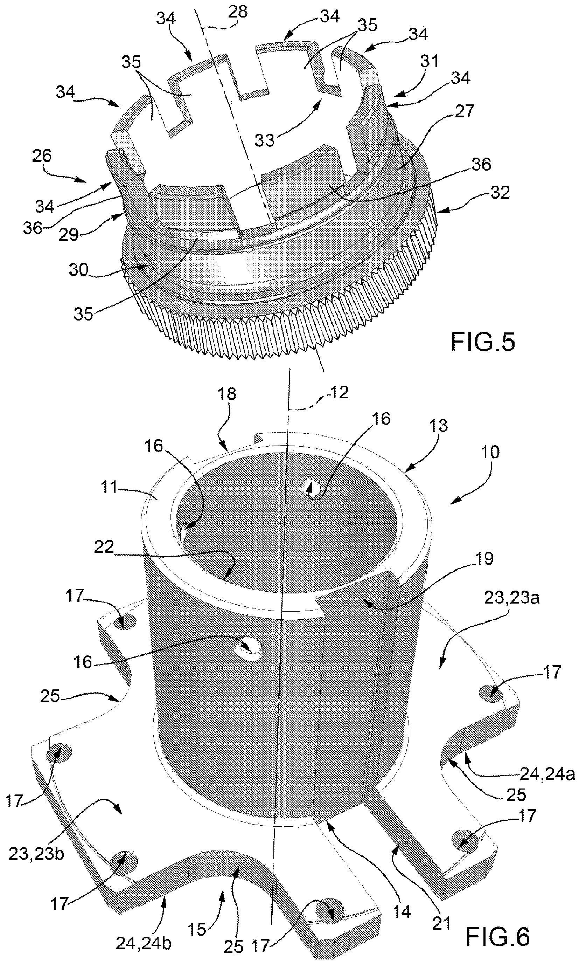

Device 1 further comprises a flanged body 10 (shown in detail in figure 6), which comprises, in turn: a tubular body 11 with a longitudinal axis 12 and two free ends, indicated hereinafter by numbers 13 and 14; and a shaped plate 15.

The axis 12 is substantially coaxial to axis 5. The plate 15 radially projects outwards from the tubular body 11 at the free end 14.

The tubular body 11 at the free end 13 has a plurality of radial holes 16, each of which is adapted to be crossed by a connecting element (e.g. of known type and not shown), e.g. a screw, for fixing the instrumentation 7 to the tubular body 11 of the flanged body 10.

The plate 15 has a plurality of through holes 17 with axis parallel to axis 12. Each hole 17 is adapted to be crossed by a connection system (of known type and not shown), e.g. a screw, for fixing the plate 15 to the box-shaped body 9, as shown in greater detail below.

As shown again in figure 6, the tubular body 11 has a pair of grooves, shown by reference numerals 18 and 19. The grooves 18 and 19 are parallel to the axis 12 and radially face the outside of the tubular body 11. Preferably, the grooves 18 and 19 are diametrically opposite to each other. As shown, the grooves 18 and 19 are essentially U-shaped.

Again as shown in figure 6, plate 15 has two openings indicated by reference numerals 20 and 21, which completely cross plate 15. Opening 20 faces the inside of groove 18; similarly, opening 21 faces the inside of groove 19. Opening 21 is U-shaped in plan and laterally faces the outside of the plate 15. Similarly, opening 20 is U-shaped in plan and laterally faces the outside of plate 15.

Substantially, groove 18 and the corresponding opening 20 have the same width; similarly, groove 19 and the corresponding opening 21 have the same width.

The tubular body 11 internally delimits a circular shaped cavity 22, which is adapted to house at least in part the drive shaft 4, as shown in greater detail below. Furthermore, plate 15 has a pair of greater side surfaces, indicated by reference numerals 23 and 24, which are parallel to each other. Surface 23 faces tubular body 11; while surface 24 faces outwards. As shown in figure 6, openings 20 and 21 divide surfaces 23 and 24 into two portions, indicated by reference numerals 23a, 23b and by reference numerals 24a and 24b, respectively. The plate 15 further has a shaped side profile; particular, the plate 15 has a plurality of recesses 25, uniformly distributed about axis 12 having a V-shaped profile with rounded vertex; essentially, each recess 25 has at least one rounded portion.

The gear system 8 comprises a transmission element, indicated hereinafter as inlet member 26 (shown in detail in figure 5), which comprises, in turn: a tubular body 27, which has a longitudinal axis 28 and a pair of axial ends, indicated by reference numerals 29 and 30; a hooking unit 31, which axially projects from the end 29 of the tubular body 27; and a ring gear 32, which axially projects from the end of the tubular body 27. The inlet member 26 has a circular section inner longitudinal cavity 33; cavity 33 longitudinally crosses both the tubular body 27 and the ring gear 32. Preferably, the hooking unit 31 comprises a plurality of tabs 34, which axially project from the end 29 of the tubular body 27. Each tab 34 comprises a support 35, which is partially curved, and a tooth 36, which radially projects outwards from a respective support 35. Each tab 34 is adapted to be coupled to a respective portion of the steering wheel 6, as will be shown in greater detail below.

As shown in figure 4, the inlet member 26 is fitted about the tubular body 11 of the flanged body 10; in particular, the inlet member 26 is rotatably fitted about the tubular body 11. In particular, the inlet member 26 is arranged in contact with the surface 23 of the plate 15. Furthermore, the inlet member 26 is connected to the steering wheel 6 means of the hooking unit 31, as will be explained in greater detail below. In other words, the inlet member 26 may be turned about the axis 5 (and about the tubular body 11) by means of the steering wheel 6.

The gear system 8 further comprises an outlet member 40 and at least one planet gear 41, each of which is adapted to transfer a torque to the inlet member 26 of the outlet member 40. In particular, the outlet member 40 comprises a tubular body 42, which has an inner cavity 43, and a ring gear 44, which radially projects outwards from the tubular body 42.

As shown in figure 4, the outlet member 40 is coaxial with axis 5 and the flanged body 10 is fitted about an end portion of the tubular body 42 of the outlet member 40, so as to take the plate 15 essentially in contact with the ring gear 44.

The drive shaft 4 is connected to the outlet member 40 so as to turn about axis 5 along with the outlet member 40. The shaft 4 is connected to the outlet member 40 by means of systems of known type, e.g. by means of a cotter connection 45.

Again as shown in figure 4, the gear system 8 comprises a plurality of planet gears 41, in particular four, uniformly distributed about axis 5 (as will be explained in greater detail below). According to a variant (not shown) the gear system 8 comprises three planet gears 41.

Each planet gear 41 comprises, in turn, a tubular body 50 having an axis 51 parallel to axis 5 and an inner cavity 52, a cylindrical pin 53 coaxial to axis 51 arranged through the body 50, and a pair of ring gears 54 and 55, which are coaxial to axis 51. Each ring gear 54 or 55 radially projects from a respective end of the body 50. In particular, the ring gears 54 and 55 are reciprocally distanced apart along axis 51 so as to laterally delimit an annular groove 56 with the body 50. Preferably, the groove 56 is in an intermediate position with respect to pin 53.

The body 50 is rotatably fitted about the pin 53. For example, the body 50 is fitted on the pin 53 by means of a bearing system of known type and diagrammatically illustrated. Each pin 53 is fitted in a predetermined position on the box-shaped body 9, as will be explained in greater detail below.

As shown in figure 4, the ring gear 54 of each planet gear 41 meshes with the ring gear 32 in the inlet member 26; while, the ring gear 55 of each planet gear 41 meshes with the ring gear 44 of the outlet member 40. As shown in figure 4, the annular grove 56 is adapted to house, at least in part, a respective portion of the plate 15 of the flanged body 10. In particular, the groove 56 faces a respective recess 25 of the flanged body 10; in this manner, the rotation of the planet gear 41 is not hindered by the plate 15.

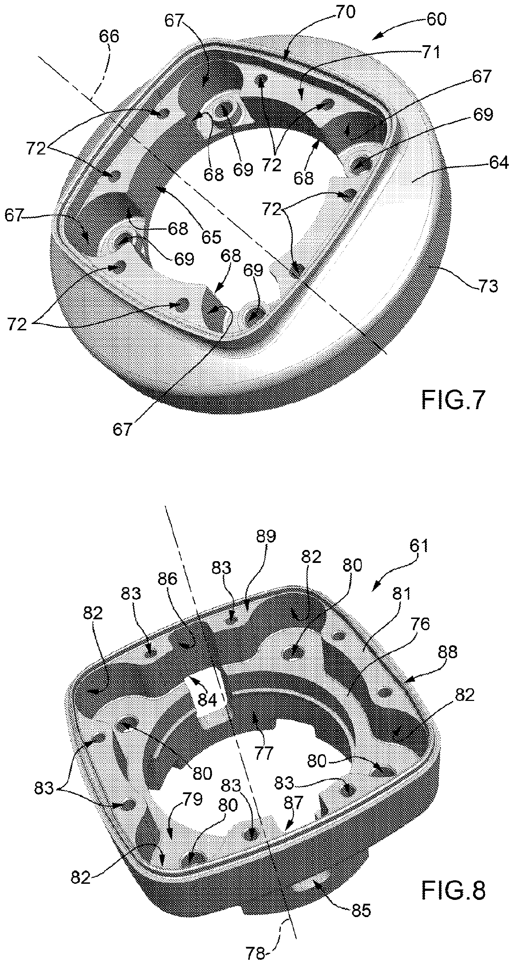

As shown in figures 3 and 4, the box-shaped body 9 comprises an upper shell 60 and a lower shell 61, which enclose the gear system 8. As shown in figure 7, the upper shell 60 comprises an axial-symmetric body 64, which has a central cavity 65 and essentially circular section with axis 66, and a plurality of housings 67 also essentially with circular section. The cavity 65 is adapted to house at least the ring gear 32 of the inlet member 26. Each housing 67 faces the inside of the cavity 65 through a window 68 and is adapted to house at least in part a respective planet gear 41. In particular, a cylindrical seat 69 adapted to house the end of a respective pin 53, is present in each housing 67. Furthermore, the shell 60 comprises an edge 70, which projects from the body 64 and extends peripherally about all the housings 67. Finally, the body 64 has a substantially flat surface 71 which extends inside the edge 70 and a plurality of holes 72 which are made thorough the surface 71 and parallel to axis 66. The holes 72 are uniformly distributed about axis 66 and their distribution coincides with the distribution of the holes 17 of the flanged body 10. The shell 60 further comprises an edge 73, which axially projects from the edge of the body 64 and is opposite to edge 70.

As shown in figure 8, the lower shell 61 comprises a body 76, which has a circular section cavity 77 with axis 78. The cavity 77 is adapted to house at least the ring gear 44 of the outlet member 40. Furthermore, the shell 61 has a surface 79 transversal to axis 78 on which a plurality of seats are made 80, each of which is adapted to house an end of a respective pin 53. Furthermore, the shell 61 comprises a wall 81, which axially projects from the surface 79 and is internally shaped so as to delimit a plurality of housings 82, each of which is adapted to house at least partially a respective planet gear 41. The distribution of seats 80 and of housings 82 about axis 78 corresponds to the distribution of seats 69 and of housings 67 about axis 66. Furthermore, the shell 61 has a plurality of holes 83, the distribution of which about axis 78 corresponds to the distribution of the holes 72 about axis 66. Additionally, the shell 61 has a pair of windows, indicated by reference numerals 84 and 85, respectively, which are radial and put the cavity 77 into communication with the outside. In particular, the shell 61 has a longitudinal groove 86 in wall 81, which groove leads to the window 84 and a longitudinal groove 87 which leads to the window 85. Finally, the shell 61 comprises an edge 88, which projects from the wall 81 and is adapted to be matched with the edge 70 of the shell 60. It is worth noting that the wall 81 is axially delimited by a flat surface 89, which extends inside the edge 88.

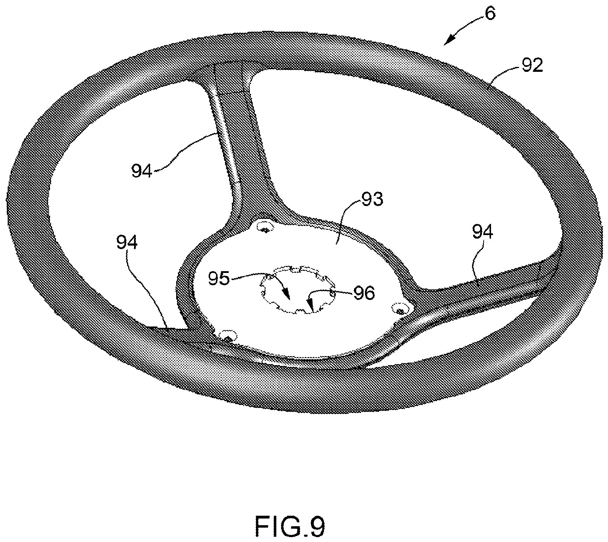

As shown in figure 9, the steering wheel comprises a circular handlebar 92, a support plate 93 and a plurality of radii 94, which connected the handlebar 92 to the plate 93. The plate 93 has a circular plan shape and an inner cavity 95, which is delimited by a toothed profile 96. The profile 96 is adapted to interact with the hooking unit 31 so as to fix the gear system 8, and in particular the inlet member 26, to the steering wheel 6.

As shown in figures 3 and 4, the shell 61 defines the base of the box-shaped body 9 housing the gear system 8. In particular, the outlet member 40 fitted about the shaft 4 is rotatably mounted in the cavity 77 and axially projects beyond the edge 88 of the shell 61 itself. Each pin 53 is inserted at a free end inside a respective seat 80 of the shell 61; similarly, the ring gear 55 of each planet gear 41 is rotatably mounted in a respective housing 82 in the shell 61 and meshes with the ring gear 44 of the outlet member 40.

The plate 15 is mounted in the box-shaped body 9 so that: surface 24 of the flanged body 10 is arranged in contact with surface 89 of the shell 61; holes 17 are aligned with holes 83; and grooves 86 and 87 are aligned with grooves 18 and 19, respectively (shown in detail in figure 3). It can be observed in this manner that the sequence of groove 18, opening 20, groove 86 and window 84 defines a channel for the passage of electric cables 100. Similarly, the sequence of groove 19, opening 21, groove 87 and window 85 defines a channel for the passage of electric cables 101. The cables 100 and 101 are adapted to connect the instrumentation 7 to the external control members of known type and not shown (e.g. control units or control levers).

As shown in figure 4, the ring gear 54 of each planet gear 41 is rotatably fitted in a respective housing 67 of the shell 60 and meshes with the ring gear 32 of the inlet member 26. Similarly, the upper end of the pin 53 of each planet gear 41 is inserted in a respective seat 69 of the shell 60. Thus, the gear system 8 is fixed to the plate 93 of the steering wheel 6 by means of the hooking unit 31. It is worth noting that the flanged body 10 crosses the cavity 95 and projects over the plate 93. The upper end of the tubular body 11 is connected (in known manner and diagrammatically illustrated) to the instrumentation 7, which is maintained in its fixed position (also during the rotation of the steering wheel 6) by the flanged body 10.

The operation of the steering device 1 is described below.

By turning the steering wheel 6 the operator causes the rotation of the inlet member 26 through the hooking unit 31. Consequently, the ring gear 32 of the inlet member 26 turns the planet gears 41 by meshing with the respective ring gears 54. Furthermore, the planet gears 41, by means of the meshing of the respective ring gear 55 with the ring gear 44, transfer the torque to the outlet member 40 and, consequently to the drive shaft 4.

It is worth noting that the box-shaped body 9 remains stationary in a predetermined position, as the flanged body 10, which is fixed to the box-shaped body 9 itself. In particular, it is worth noting that the cables 100 and 101 are laid though respective channels which remain fixed during the operation of the steering wheel 6 itself. The shape and the arrangement of the channels allows to connect the instrumentation 7 to a plurality of external control units (e.g. a pair of side levers) in secure, stable manner.

From the above, it can be inferred that the steering device 1 of the type described above comprises an instrumentation 7 arranged in the middle of the steering wheel 6 so as to allow a convenient viewing of information pertaining to vehicle operation by the operator.

Furthermore, the device 1 of the type described above has a gear system 8 of the type capable of transferring the rotation of the steering wheel 6 to the drive shaft 4 without the instrumentation 7 itself being turned. Additionally, the device 1 of the type described above is compact, rugged and reliable. Finally, the connection of the instrumentation 7 to an external control unit by means of the cables 100 and 101 is particularly stable and strong by virtue of the passage channels made in the gear system 8.

Preferably, the steering device 1 of the type described above is installed on industrial vehicles for handling materials; e.g. the device 1 of the type above is described and installed on fork lift-trucks for handling pallets.

## Claims

1. A steering device comprising a drive shaft (4) rotating around a first axis (5), a steering wheel (6), an instrumentation (7), which is arranged in a central position of the steering wheel (6), and a gear system (8), which connects the steering wheel (6) to the drive shaft (4); the device (1) comprising a flanged body (10), which at a first end (13) is connected to the instrumentation (7) and at a second end (14) is fixed to a box-shaped body (9), which houses the gear system (8); the box-shaped body (9) comprising a first, upper shell (60) and a second, lower shell (61); the flanged body (10) comprising a tubular body (11), coaxial to said first axis (5), and a shaped plate (15), which radially projects outwards from the tubular body (11) at the second end (14) and is adapted to connect the flanged body (10) itself to the box-shaped body (9); the device (1) **being characterized in that** the flanged body (10) has a first and a second groove (18, 19); wherein the first and the second groove (18, 19) are obtained in the tubular body (11) and radially face the outside of the tubular body (11); wherein the shaped plate (15) has a first and a second opening (20, 21), which pass entirely through the plate (15); the second shell (61) has a first and a second window (84, 85) putting the inside of the box-shaped body (9) into communication with the outside; wherein the second shell (61) has a third and a fourth groove (86, 87); wherein the first opening (20) faces the inside of the first groove (18); the second opening (21) faces the inside of the second groove (19); the third groove (86) connects the first opening (20) with the first window (84); and the fourth groove (87) connects the second opening (21) with the second window (85).

2. A device according to claim 1, wherein the first and the second groove (18, 19) are opposite to each other about the tubular body (11).

3. A device according to claim 1 or 2, wherein the gear system (8) comprises a first ring gear (32), which is placed around the tubular body (11) of the flanged body (10) and is in contact with a first surface (23) of the shaped plate (15), a second ring gear (44), which is coaxial to said first axis (5) and is in contact with a second surface (24) of said shaped plate (15), and a transmission system (41; 53, 54, 55), which is suited to transmit a torque from the first ring gear (32) to the second ring gear (44) and faces the flanged body (10); in particular, the first ring gear (32) is connected to the steering wheel (6) and the second ring gear (44) is connected to the drive shaft (4).

4. A device according to claim 3, wherein the transmission system (41; 50, 53, 54, 55) comprises at least one planet gear (41) having a second longitudinal axis (51), which is parallel to said first axis (5); each planet gear (41) comprises a third and a fourth ring gear (54, 55); wherein the third ring gear (54) meshes with the first ring gear (32); and wherein the fourth ring gear (55) meshes with the second ring gear (44); in particular, each planet gear (41) comprises a support body (50), on which the third and the fourth ring gear (54, 55) are fixed.

5. A device according to claim 4, wherein the shaped plate (15) has at least one recess (25) for each planet gear (41); wherein each recess (25) is adapted to laterally surround at least one portion of the respective planet gear (41) and is arranged between the third and the fourth ring gear (54, 55).

6. A device according to claim 4 or 5, wherein the box-shaped body (9) comprises at least one fixing element (69; 80) for each planet gear (41), so as to limit the translation of the respective planet gear (41) with respect to the box-shaped body (9) itself.

7. A device according to any one of preceding claims, wherein the shaped plate (15) is connected to the box-shaped body (9); the first opening (20) and the first groove (18) of the flanged body (10) are aligned with the first window (84) of the box-shaped body (9); the second opening (21) and the second groove (19) of the flanged body (10) are aligned with the second window (85).

8. A device according to claim 7, wherein the device (1) comprises at least one cable (100; 101), which is connected to the instrumentation (7) and is arranged through a respective groove (18; 19), a respective opening (20; 21) and a respective window (84; 85); an end of the cable (100; 101) projecting outside of said box-shaped body (9).

## Patentansprüche

1. Lenker mit einer um eine erste Achse (5) drehbaren Antriebswelle (4), ein Lenkrad (6), eine Instrumentierung (7), die in einer Zentralposition des Lenkrads (6) angeordnet ist, und ein Getriebe (8), welches das Lenkrad (6) mit der Antriebswelle (4) verbindet; wobei der Lenker (1) einen Flanschkörper (10) umfasst, der an einem ersten Ende (13) mit der Instrumentierung (7) verbunden ist und an einem zweiten Ende (14) an dem boxförmigen Körper (9) befestigt ist, der ein Getriebe (8) aufnimmt; wobei der boxförmige Körper (9) eine erste obere Hülle (60) und eine zweite untere Hülle (61) umfasst; wobei der Flanschkörper (10) einen rohrförmigen Körper (11) koaxial zur ersten Achse (5) und eine Formplatte (15) umfasst, die radial nach außen vom rohrförmigen Körper (11) an dem zweiten Ende (14) vorsteht und so angepasst ist, dass sie den Flanschkörper (10) selbst mit dem boxförmigen Körper (9) verbindet; wobei der Lenker (1) **dadurch gekennzeichnet ist, dass** der Flanschkörper (10) eine erste und eine zweite Nut (18, 19) hat; wobei die erste und die zweite Nut (18, 19) in dem rohrförmigen Körper (11) aufgenommen sind und radial zur Außenseite des rohrförmigen Körpers (11) weisen; wobei die Formplatte (15) eine erste und eine zweite Öffnung (20, 21) hat, welche vollständig durch die Platte (15) reicht; wobei die zweite Hülle (61) ein erstes und ein zweites Fenster (84, 85) hat, die die Innenseite des boxförmigen Körpers (9) mit der Außenseite in Verbindung bringt; wobei die zweite Hülle (61) eine dritte und eine vierte Nut (86, 87) hat; die erste Öffnung (20) zur Innenseite der ersten Nut (18) weist; die zweite Öffnung (21) zur Innenseite der zweiten Nut (19) weist; wobei die dritte Nut (86) die erste Öffnung (20) mit dem ersten Fenster (84) verbindet; und die vierte Nut (87) die zweite Öffnung (21) mit dem zweiten Fenster (85) verbindet.

2. Lenker nach Anspruch 1, wobei die erste und die zweite Nut (18, 19) sich um den rohrförmigen Körper (11) herum gegenüberliegen.

3. Lenker nach Anspruch 1 oder 2, wobei das Getriebe (8) eine erste Ringverzahnung (32) umfasst, die um den rohrförmigen Körper (11) des Flanschkörpers (10) angeordnet ist und mit einer ersten Fläche (23) der Formplatte (15) in Kontakt steht, eine zweite Ringverzahnung (44) die koaxial zur ersten Achse (5) ist und in Kontakt mit einer zweiten Fläche (24) der Formplatte (15) steht, und ein Transmissionssystem (41; 53, 54, 55), das so angepasst ist, dass es eine Drehkraft von der ersten Ringverzahnung (32) auf die zweite Ringverzahnung (44) überträgt und dem Flanschkörper (10) gegenüberliegt; insbesondere ist die erste Ringverzahnung (32) mit dem Lenkrad (6) verbunden und die zweite Ringverzahnung (44) ist mit der Antriebswelle (4) verbunden.

4. Lenker nach Anspruch 3, wobei das Transmissionssystem (41; 50, 53, 54, 55) mindestens ein Planetengetriebe (41) mit einer zweite Längsachse (51) umfasst, die parallel zur ersten Achse (5) ist; wobei jedes Planetengetriebe (41) eine dritte und eine vierte Ringverzahnung (54, 55) umfasst; wobei die dritte Ringverzahnung (54) mit der ersten Ringverzahnung (32) verzahnt; und wobei die vierte Ringverzahnung (55) mit der zweiten Ringverzahnung (44) verzahnt: insbesondere jedes Planetengetriebe (41) einen Stützkörper (50) umfasst, auf dem die dritte und die vierte Ringverzahnung (54, 55) befestigt sind.

5. Lenker nach Anspruch 4, wobei die Formplatte (15) mindestens eine Ausnehmung (25) für jedes Planetengetriebe (41) hat; wobei jede Ausnehmung (25) so angepasst ist, dass sie seitlich mindestens einen Bereich des entsprechenden Planetengetriebes (41) umgibt ist und zwischen der dritten und der vierten Ringverzahnung (54, 55) angeordnet ist.

6. Lenker nach Anspruch 4 oder 5, wobei die boxförmige Körper (9) mindestens ein Fixierelement (69; 80) für jedes Planetengetriebe (41) umfasst, um die Translation des entsprechenden Planetengetriebes (41) im Bezug auf den boxförmigen Köper (9) selbst zu beschränken.

7. Lenker nach einem der vorhergehenden Ansprüche, wobei die Formplatte (15) mit dem boxförmigen Körper (9) verbunden ist; die erste Öffnung (20) und die erste Nut (18) des Flanschkörpers (10) mit dem ersten Fenster (84) des boxförmigen Körper (9) ausgerichtet sind; die zweite Öffnung und die zweite Nut (19) des Flanschkörpers (10) mit dem zweiten Fenster (85) ausgerichtet ist.

8. Lenker nach Anspruch 7, wobei der Lenker (1) mindestens ein Kabel (100; 101) umfasst, welches mit der Instrumentierung (7) verbunden ist und durch eine entsprechende Nut (18; 19) hindurch angeordnet ist, eine entsprechende Öffnung (20; 21) und ein entsprechendes Fenster (84; 85); wobei ein Ende des Kabels (100; 101) außen vom boxförmigen Körper (9) hervorragt.

## Revendications

1. Dispositif de direction comprenant un arbre d'entraînement (4) tournant autour d'un premier axe (5), un volant de direction (6), une instrumentation (7) agencée dans une position centrale du volant de direction (6), et un système d'engrenage (8) qui relie le volant de direction (6) à l'arbre d'entraînement (4); le dispositif (1) comprenant un corps à bride (10) qui, à une première extrémité (13), est relié à l'instrumentation (7) et à une seconde extrémité (14) est fixé à un corps en forme de boîte (9) qui loge le système d'engrenage (8); le corps en forme de boîte (9) comprenant une première coquille supérieure (60) qui loge le système d'engrenage (8) et une seconde coquille inférieure (61) ; le corps à bride (10) comprenant un corps tubulaire (11), coaxial audit premier axe (5), et une plaque moulée (15) qui fait saillie radialement vers l'extérieur depuis le corps tubulaire (11) à la seconde extrémité (14) et est adaptée pour relier le corps à bride (10) lui-même au corps en forme de boîte (9); le dispositif (1) étant **caractérisé en ce que** le corps à bride (10) présente une première et une deuxième rainures (18, 19); dans lequel la première et la deuxième rainures (18, 19) sont obtenues dans le corps tubulaire (11) et font face radialement à l'extérieur du corps tubulaire (11); dans lequel la plaque moulée (15) présente une première et une seconde ouvertures (20, 21) qui traversent entièrement la plaque (15); la seconde coquille (61) possède une première et une seconde fenêtres (84, 85) ménagées à l'intérieur du corps en forme de boîte (9) et communiquant avec l'extérieur; dans lequel la seconde coquille (61) possède une troisième et quatrième rainures (86, 87) ; dans lequel la première ouverture (20) fait face à l'intérieur de la première rainure (18) ; la seconde ouverture (21) fait face à l'intérieur de la seconde rainure (19) ; la troisième rainure (86) relie la première ouverture (20) à la première fenêtre (84) ; et la quatrième rainure (87) relie la seconde ouverture (21) à la seconde fenêtre (85).

2. Dispositif selon la revendication 1, dans lequel la première et la deuxième rainures (18, 19) sont opposées l'une à l'autre autour du corps tubulaire (11).

3. Dispositif selon la revendication 1 ou 2, dans lequel le système d'engrenage (8) comprend une première couronne dentée (32) qui est placée autour du corps tubulaire (11) du corps à bride (10) et est en contact avec une première surface (23) de la plaque moulée (15), une seconde couronne dentée (44) qui est coaxiale audit premier axe (5) et est en contact avec une seconde surface (24) de ladite plaque moulée (15) et un système de transmission (41; 53, 54, 55), qui est adapté pour transmettre un couple de la première couronne dentée (32) à la seconde couronne dentée (44) et fait face au corps à bride (10); en particulier, la première couronne dentée (32) est reliée au volant de direction (6) et la seconde couronne dentée (44) est reliée à l'arbre d'entraînement (4).

4. Dispositif selon la revendication 3, dans lequel le système de transmission (41; 50, 53, 54, 55) comprend au moins un engrenage planétaire (41) ayant un second axe longitudinal (51) parallèle audit premier axe (5); chaque engrenage planétaire (41) comprend une troisième et une quatrième couronnes dentées (54, 55); dans lequel la troisième couronne dentée (54) s'engrène avec la première couronne (32); et dans lequel la quatrième couronne dentée (55) s'engrène avec la seconde couronne dentée (44); en particulier, chaque engrenage planétaire (41) comprend un corps de support (50), sur lequel sont fixées les troisième et quatrième couronnes dentées (54, 55).

5. Dispositif selon la revendication 4, dans lequel la plaque moulée (15) comporte au moins un évidement (25) pour chaque engrenage planétaire (41); dans lequel chaque évidement (25) est adapté pour entourer latéralement au moins une partie de engrenage planétaire respectif (41) et est disposé entre la troisième et la quatrième couronnes dentées (54, 55).

6. Dispositif selon la revendication 4 ou 5, dans lequel le corps en forme de boîte (9) comprend au moins un élément de fixation (69; 80) pour chaque engrenage planétaire (41), de manière à limiter la translation de l'engrenage planétaire respectif (41) par rapport au corps en forme de boîte (9) lui-même.

7. Dispositif selon l'une quelconque des revendications précédentes, dans lequel la plaque moulée (15) est reliée au corps en forme de boîte (9); la première ouverture (20) et la première rainure (18) du corps à bride (10) sont alignées avec la première fenêtre (84) du corps en forme de boîte (9); la second ouverture (21) et la deuxième rainure (19) du corps à bride (10) sont alignées avec la seconde fenêtre (85).

8. Dispositif selon la revendication 7, dans lequel le dispositif (1) comprend au moins un câble (100; 101) qui est relié à l'instrumentation (7) et est disposé à travers une rainure respective (18; 19), une ouverture respective (20; 21) et une fenêtre respective (84; 85); une extrémité du câble (100; 101) faisant saillie à l'extérieur dudit corps en forme de boîte (9).
